# EUROPÄISCHE PATENTSCHRIFT

(11) **EP 1 001 274 B1**
(45) Veröffentlichungstag und Bekanntmachung des Hinweises auf die Patenterteilung: **17.08.2005**
(21) Anmeldenummer: 99121763.9
(22) Anmeldetag: 03.11.1999
(51) Int. Cl.: G01S 7/40

(54) **Verfahren und Vorrichtung zur Justierung eines Strahlenganges eines strahlaussendenden Sensors**
Method and apparatus for boresighting a radiation path of a radiating sensor
Procédé et dispositif pour le simbleautage d'un cheminement de rayonnement d'un capteur rayonnant

(30) Priorität: 12.11.1998 DE 19852101
(43) Veröffentlichungstag der Anmeldung: 17.05.2000
(73) Patentinhaber: Siemens Aktiengesellschaft, 80333 München (DE)
(72) Erfinder: Säger, Peter, 61381 Friedrichsdorf (DE); Neugärtner, Jörg, 93051 Regensburg (DE); Landsiedel, Thomas, 85110 Kipfenberg (DE)

(56) Entgegenhaltungen:
- EP-A- 0 654 680
- DE-A- 19 642 811
- DE-C- 19 707 591
- US-A- 5 495 254

## Beschreibung

Die Erfindung betrifft ein Verfahren zur Justierung des Strahlenganges eines strahlaussendenden Sensors, welcher an einem Kraftfahrzeug angeordnet ist sowie eine Einrichtung zur Durchführung des Verfahrens.

Bei Abstandsregelsystemen für Kraftfahrzeuge ist an dem Kraftfahrzeug ein Radar- oder Lasersensor angeordnet, mit dessen Hilfe ein oder mehrere sich in Fahrtrichtung des Fahrzeuges befindenden Objekte detektiert werden. Zu diesem Zweck sendet der Sensor ein Signal aus, daß von den Objekten reflektiert wird. Der reflektierte Strahl wird vom Sensor wieder empfangen und in einer Auswerteschaltung ausgewertet. Die Auswerteschaltung bestimmt aus den Sensorsignalen die relative Fahrzeuggeschwindigkeit, den Abstand des Fahrzeuges vom detektierten Objekt sowie die seitliche Ablage des vorausfahrenden Fahrzeuges von der Fahrzeugfahrtrichtung.

Infolge einer ungenauen Strahlrichtung des Sensors werden Objekte erfaßt, welche für die Regelung nicht relevant sind. Wird ein falsches Fahrzeug als das zum Fahrzeug am nächsten gelegene erkannt, wird auf dieses Objekt die Abstandsregelung eingestellt, was gefährliche Situationen im Straßenverkehr bis hin zu einem Auffahrunfall zur Folge haben kann.

Insbesondere bei der Bestimmung der seitlichen Abweichung des Zieles von der Fahrzeugfahrtrichtung führen Ungenauigkeiten des Winkelfehlers mit Zunahme der Entfernung des georteten Zieles zu großen Fehlern bei der errechneten Seitenablage. Da die verwendeten Sensoren Detektionsbereiche bis zu 150 m aufweisen, würde in dieser Entfernung ein Justagefehlwinkel am Fahrzeug von einem Grad zu einem Fehler von ca. 2,9 m führen. Da die Fahrbahnbreite im Durchschnitt ca. 3,5 m beträgt, kann dadurch sehr schnell eine falsche Zuordnung des Zieles zur vorausbestimmten Fahrspur des zu regelnden Fahrzeuges erfolgen.

In der DE-19642811-A1 wird ein Verfahren zum Justieren einer Richtantenne eines Radarsystems angegeben, bei dem zur Überprüfung der Justierung ein Laserstrahl verwendet wird. Ein zur Durchführung des Verfahrens ausgelegtes Radarsystem wird dabei entweder mit einer Vorrichtung zur Aufnahme einer Laserquelle versehen oder weist spiegelreflektierende Bereiche auf, die mit einer externen Laserquelle beleuchtet werden können. Bei der Justierung muss der vom Radarsystem ausgesendete bzw. reflektierte Laserstrahl eine Zielmarkierung beleuchten, wobei die Kenntnis von Winkel und Entfernung zwischen dem Laserstrahl und der Strahlachse der Richtantenne des Radarsystems erforderlich sind.

Der Erfindung liegt somit die Aufgabe zugrunde, ein Verfahren und eine Einrichtung anzugeben, mit welchem eine einfache und trotzdem hochgenaue Einstellung der Strahlrichtung des strahlaussendenden Elementes am Kraftfahrzeug ermöglicht wird.

Erfindungsgemäß wird die Aufgabe dadurch gelöst, dass im Stillstand des Fahrzeuges ein externer Justierstrahl auf eine strengebene Fläche am Sensor auftrifft, welche den Justierstrahl reflektiert, wobei der auftreffende und der reflektierte Justierstrahl durch eine Lageänderung des Sensors in Überdeckung gebracht werden.

Der Vorteil des Verfahrens besteht darin, dass die Einstellgenauigkeit nur von der Genauigkeit der Lagebestimmung vor dem Fahrzeug, der Lichtquelle bzw. der Projektionsebene zueinander und der Lage der Reflektionsfläche zum Sensorerfassungsbereich abhängt. Die absolute Lage der Bezugsfläche zur Projektebene und zur Lichtquelle ist dabei vernachlässigbar. Weiterhin kann auf eine Betrachtung der Einbautoleranzen des Systems am Fahrzeug vollständig verzichtet werden, d. h. die absolute Lage des Sensors zur Fahrzeugmitte oder über dem Untergrund bzw. der Fahrbahn ist nicht relevant. Somit wird auch der Einfluss von Fahrwerksvarianten z. B. tiefere Sportfahrwerke oder Fertigungstoleranzen im Bereich einiger Zentimeter zwischen zwei Fahrzeugen eliminiert.

Durch das erfindungsgemäße Verfahren kann der Sensor sowohl in der Horizontalen (Azimut) als auch in der Vertikalen (Elevation) sicher justiert werden.

Zur Justierung des Azimut breitet sich der Justierstrahl entlang oder parallel zu einer tatsächlichen Fahrzeugfahrtrichtung des Kraftfahrzeuges aus. Da die eingesetzten Sensoren in der Horizontalen nur einen Erfassungsbereich von wenigen Winkelgraden realisieren können, ist es von besonderer Bedeutung mit Hilfe des erfindungsgemäßen Verfahrens auch kleine Winkelveränderungen zuverlässig einstellen zu können.

Ähnlich verhält es sich bei der Justage der Vertikalen. Dabei ist der Justierstrahl auf eine ebene Fahrzeugaufstandsfläche ausgerichtet. Die Fahrzeuge werden im Beladungszustand leer am Bandende im Werk justiert. Da die Fahrzeuge im Betrieb der Abstandsregelung meist beladen sind, wird der Erfassungsbereich in der Elevation in seiner Lage zur Ideallinie (der Horizontalen) verdreht. Außerdem kommt hinzu, daß die Fahrzeuge im Fahrbetrieb sehr stark nicken, d. h. das Fahrzeug führt eine vertikale Bewegung um den Fahrzeugschwerpunkt aus. Dies erfolgt unter anderem beim Anfahren und Beschleunigen oder beim Bremsen. Weiterhin wird der Erfassungsbereich durch Bergfahrt und Talfahrt des Fahrzeuges noch stark eingeschränkt.

In einer Ausgestaltung der Erfindung tritt der Justierstrahl vor Auftreffen auf den Sensor senkrecht aus einer Projektionsebene aus, auf welcher der reflektierte Strahl auftrifft und eine Abbildung erzeugt. Mit Hilfe einer solchen Projektionsebene ist eine Abweichung zwischen dem ausgesendeten und dem reflektierten Justierstrahl einfach feststellbar.

Vorteilhafterweise ist der Durchmesser des Justierstrahles mindestens in dem Bereich zwischen der Projektionsebene und dem Sensor annähernd konstant. Der Durchmesser des Lichtstrahles muß dabei so ausgewählt werden, daß der kleinste Verstellweg um ein Vielfaches größer ist als der Lichtstrahldurchmesser. Dadurch werden Fehler in der Justage durch die Aufweitung des Lichtstrahles verhindert.

In einer Weiterbildung ist der Justierstrahl ein Laserstrahl, welcher eine hohe Konstanz über einen weiten Weg aufweist. Außerdem kann der Lichtstrahl auch ein Infrarotlichtstrahl sein.

Vorteilhafterweise entspricht die Fahrzeugfahrtrichtung der tatsächlichen Fahrachse des Kraftfahrzeuges. Diese tatsächliche Fahrachse wird mit Hilfe an sich bekannter Fahrzeugachsmeßverfahren bestimmt. Somit lassen sich heute bereits verwendete Geräte wie Achsprüfstände zur Bestimmung der Fahrzeugfahrachse einsetzen. Zusätzliche Hilfsmittel zur Bestimmung der tatsächlichen Fahrzeugfahrtrichtung sind nicht notwendig.

Die Ausrichtung der optischen Achse des Justierstrahles auf die Fahrzeugfahrtrichtung erfolgt entweder durch Ausrichtung des Fahrzeuges oder durch Ausrichtung des Justierstrahles.

Bei einer Vorrichtung zur Justierung eines am Kraftfahrzeug angeordneten strahlaussenden Sensors ist eine, einen Justierstrahl aussendende Strahlungsquelle hinter einer für den Justierstrahl durchlässigen Projektionsebene angeordnet, wobei der durch die Projektionsebene hindurchtretende Justierstrahl auf eine, am Sensor in einer reproduzierbarer Lage zum Sensor befestigten Reflexionsfläche auftrifft und der reflektierte Strahl auf der Projektionsebene abbildbar ist, wobei durch Verstellung einer, den Sensor am Fahrzeug arretierenden Einrichtung die Abbildung des reflektierten Justierstrahles mit dem ausgesandten Justierstrahl in der Projektionsebene in Übereinstimmung gebracht wird.

Der Sensor kann dabei an der Vorderfront, am Heck oder auch an den Seiten des Kraftfahrzeuges angeordnet sein.

In einer Weiterbildung weist die Projektionsebene eine Öffnung auf, durch welche der Justierstrahl hindurch tritt, wobei der Mittelpunkt der Öffnung mit der optischen Achse der Lichtquelle zusammenfällt. Dadurch wird gewährleistet, daß ein Einschalten des Radar- oder Lasersensors zur Justage nicht notwendig ist. Die genaue Einstellung der Strahlrichtung des Sensors wird nur mit externen Hilfsmitteln gewährleistet.

In einer einfachen Ausführung ist die Projektionsebene als Mattscheibe ausgebildet, auf welche der reflektierte Strahl abbildbar ist. Auf einfache Weise wird somit eine Information darüber erhalten, in welche Richtung die Verstelleinrichtung bewegt werden muß, um eine Überdeckung von ausgesandten und reflektierten Justierstrahl zu erreichen.

Eine komfortable Ausbildung der Erfindung wird dadurch erreicht, daß die Projektionsebene als aktive CCD-Zeile ausgebildet ist, die über eine Steuereinrichtung mit der Verstelleinrichtung verbunden ist. Dadurch ist eine elektronische Auswertung des Abstandes des Justierstrahles von dem reflektierten Strahl möglich. Auch hier steuert die Steuereinrichtung die Verstelleinrichtung hinsichtlich des Azimut bzw. der Elevation getrennt an, bis eine Übereinstimmung erzielt wird.

In einer Ausgestaltung ist die Reflektionsfläche durch eine Hilfseinrichtung gebildet, die durch eine Dreipunktauflage am Sensor arretiert ist. Durch diese Dreipunktauflage hat die Hilfseinrichtung eine definierte Lage zu den Bezugsflächen und somit zum Erfassungsbereich des Sensors. Dabei korreliert jeder Punkt der Auflage mit einer Bezugsfläche am Sensor.

In einer anderen Ausgestaltung ist die Reflektionsfläche eine am Sensorgehäuse selbst ausgefräste verspiegelte Fläche. Hilfseinrichtungen zur Bereitstellung der Reflexionsfläche können somit entfallen.

Die Reflektionsfläche wird in einer einfachen Ausführung durch eine verspiegelte Kunststofffläche gebildet.

Die Erfindung läßt zahlreiche Ausführungsformen zu. Eine davon soll anhand der in der Zeichnung dargestellten Figuren näher erläutert werden.

Es zeigen:
- Figur 1:: Anordnung der Abstandsregeleinrichtung an einem Kraftfahrzeug
- Figur 2:: Verstelleinrichtung.
- Figur 3:: Justierung des Azimuts mit Hilfe der erfindungsgemäßen Vorrichtung
- Figur 4:: Justierung der Elevation mit Hilfe der erfindungsgemäßen Vorrichtung
- Figur 5:: Darstellung der Projektionsebene.
- Figur 6:: automatische Verstellung.

Gleiche Merkmale sind mit gleichen Bezugszeichen gekennzeichnet.

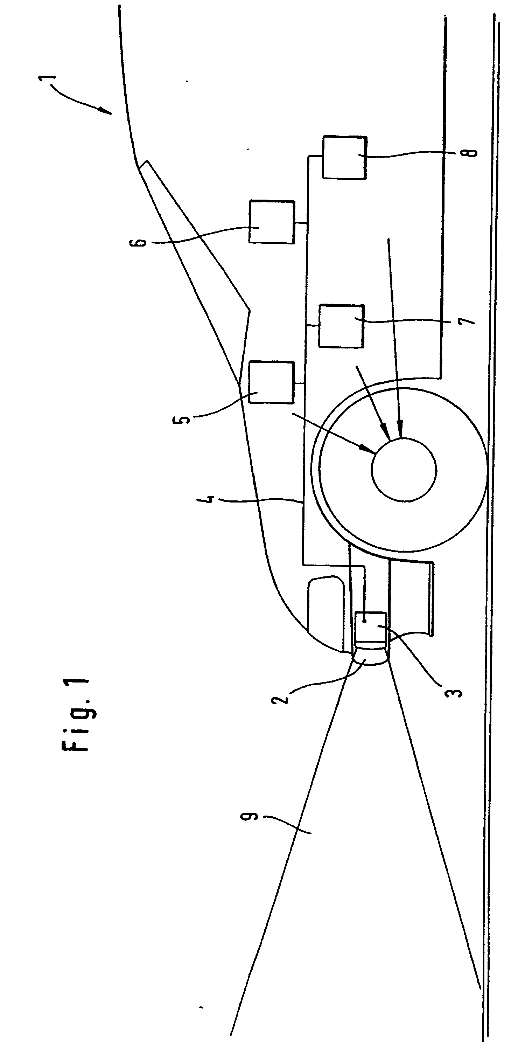

In Figur 1 ist am Stoßfänger 2 eines Kraftfahrzeuges 1 ein automatisches Geschwindigkeits- und Abstandsregelsystem 3 zur Einhaltung des Sicherheitabstandes von Fahrzeugen angeordnet, welches einen Radarsensor und die Abstandsregeleinrichtung enthält, die nicht weiter dargestellt sind. Über ein im Fahrzeug 1 vorhandenes Bussystem 4 ist das automatische Geschwindigkeit-und Abstandsregelsystem 3 mit der Motorsteuerung 5, der Bremse 7 oder dem Getriebe 8 verbunden. Elektronische Befehle regulieren durch Eingriff in die Motorsteuerung 5, die Bremse 7 bzw. das Getriebe 8 automatisch den Abstand und die Geschwindigkeit des zu regelnden Fahrzeuges 1, wenn sich dieses an ein langsameres, vorausfahrendes Fahrzeug annähert. Über eine Anzeigeeinheit 6, die ebenfalls von dem Geschwindigkeits- und Abstandsregelsystem 3 über das Bussystem 4, vorzugsweise einen CAN-Bus angesteuert wird, wird die aktuelle Geschwindigkeit und auch der Abstand zum vorausfahrenden Fahrzeug angezeigt.

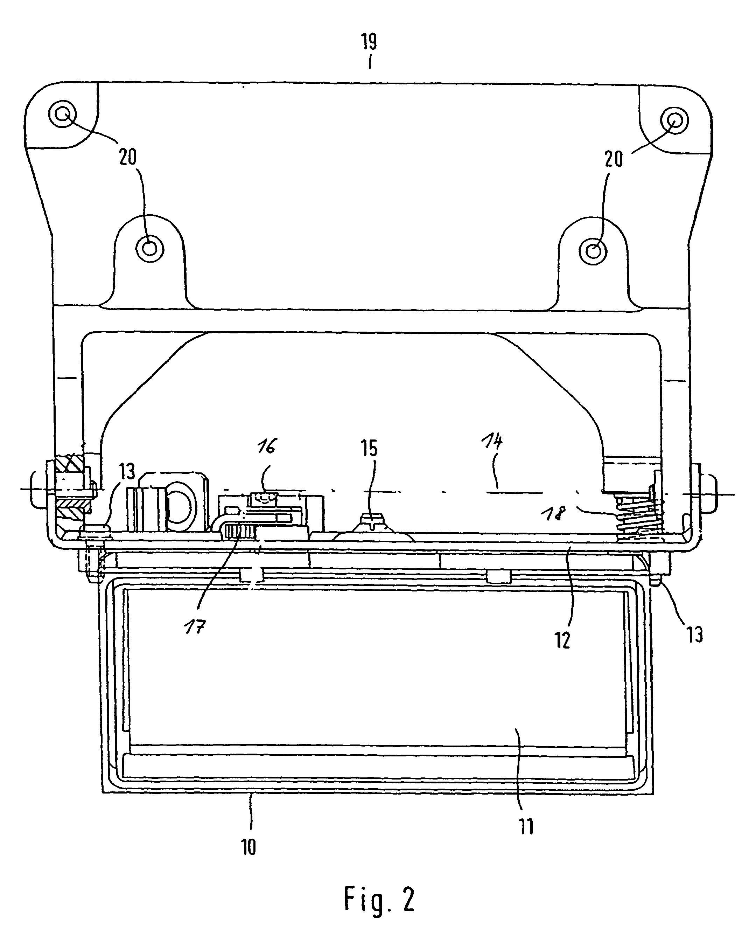

In Figur 2 ist eine Verstelleinrichtung 19 dargestellt, die mittels Schraubeinrichtungen 20 am Kraftfahrzeug 1 befestigt wird. An der Verstelleinrichtung 19 ist ein den Radarsensor enthaltendes Gehäuse 10 befestigt. Der Sensor ist nur durch seine auf dem Gehäuse 10 aufliegende, senkrecht zur Fahrtrichtung angeordnete Linse 11 gekennzeichnet.
Die Verstelleinrichtung 19 besitzt ein ebenes Winkelelement 12, das flächig mit der der Verstelleinrichtung 19 zugewandten Oberfläche des Gehäuses 10 verbunden ist. Das Winkelelement 12 erstreckt sich dabei über die gesamte Querausdehnung des Sensorgehäuses 10 und weist an jedem äußeren Bereich je eine Schraubverbindung 13 auf, welche zum Justiervorgang gelockert wird.

Zur Einstellung des Azimut des Sensorstrahles wird eine, Rasteinrichtungen 17 aufweisende Verstellschraube 16 gedreht, wobei das Gehäuse 10 um eine durch den Gehäusezapfen 15 gehende Achse geschwenkt wird. Der Gehäusezapfen 15 ist mittig auf der Oberfläche des Gehäuse 10 angeordnet und greift in das Winkelelement 12 ein. Der Abstand zwischen zwei Rasteinrichtungen entspricht einer bestimmten Winkeländerung.
Die Elevation des Sensorstrahles wird mit Hilfe einer weiteren Verstellschraube 18 eingestellt, wobei das Sensorgehäuse 10 um eine Achse 14 der Verstelleinrichtung 19 gedreht wird.

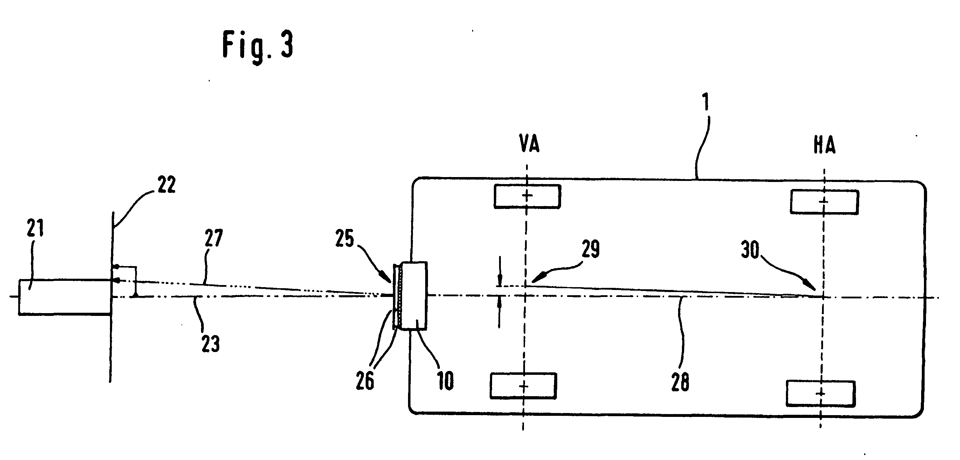

In Figur 3 ist eine Justiereinrichtung dargestellt. Diese Justiereinrichtung besteht aus einer vor dem Fahrzeug 1 aufgestellten Lichtquelle 21, vorteilhafterweise einem Laser. Vor dem Laser ist eine Projektionsebene 22 senkrecht zur optischen Achse des Laser 21 angeordnet. Der Laserstrahl 23 trifft auf einen Spiegel 25 auf, der an dem Gehäuse 10 befestigt ist.
Wie der Figur 3 zu entnehmen ist, erstreckt sich der Spiegel 25 ganzflächig über die Vorderfront des Sensorgehäuses 10 und ist mit Hilfe von drei Stegen 26 am Gehäuse 10 arretiert. Aufgrund dieser Dreipunktauflage wird eine reproduzierbare und eindeutige Lage des Spiegels 25 zum Sensorgehäuse 10 realisiert. Aufgrund dieser Anordnung macht der Spiegel 25 jede zufällige Bewegung des Radarsensors mit und es kommt zu keinen Verschiebungen zwischen Spiegel und Radarsensor.
Der von dem Spiegel 25 reflektierte Laserstrahl 27 wird auf der Projektionsebene 22 abgebildet.

Zur Ermittlung die Fahrzeuglängsachse 28 wird der Mittelpunkt 29 der Räder der Vorderachse und anschließend der Mittelpunkt 30 der Räder an der Hinterachse festgestellt. Dieser Unterschied zwischen den beiden so festgestellten Mittelpunkten 29 und 30 entspricht der Abweichung des reflektierten Laserstrahles 27 vom ausgesendeten Laserstrahl 23. Durch Verstellung der Azimutschraube 16 wird die optische Achse des Lasers 22 mit der Fahrzeuglängsachse 28 in Übereinstimmung gebracht. Die Sensoreinrichtung erhält somit eine Richtung, welche eine Ausstrahlung des Sensorstrahles 9 in genau die Fahrzeuglängsachse während des Fahrbetriebes ermöglicht.

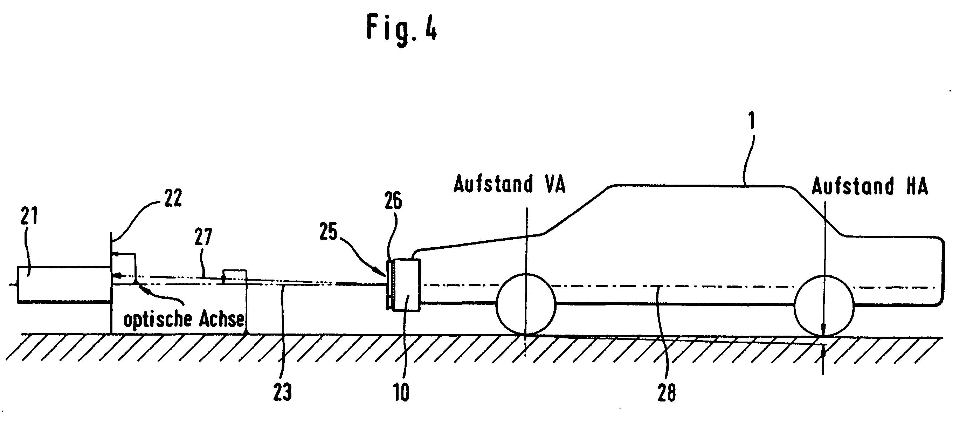

Ähnlich verhält es sich bei der Einstellung der Elevation. Es wird die schon eben beschriebene Justiereinrichtung verwendet, wobei im Stillstand des Fahrzeuges vorzugsweise bei der Konstruktionslage leer justiert wird . Gemäß Figur 4 wird einmal der Aufstand der Vorderachse VA und zum zweiten der Aufstand der Hinterachse HA gemessen. Auch hier wird der Sensorstrahl durch die Verstellung des Sensorgehäuses 10 durch Betätigung der Verstellschraube 18 so eingestellt, daß der reflektierte 27 und der ausgestrahlte Laserstrahl 23 in Übereinstimmung gebracht werden.

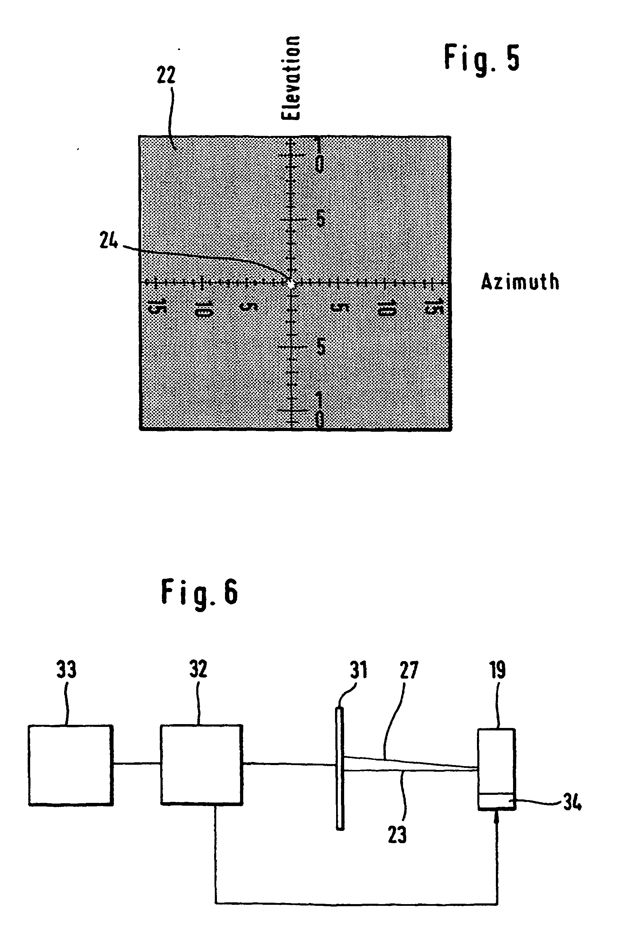

In Figur 5 ist die Projektionsebene 22 dargestellt. Zur Orientierung ist auf der Projektionsebene 22, welche in diesem Fall als Mattglasscheibe ausgebildet ist, eine Skala für die Fahrachswinkelfehler dargestellt. Dabei ist in der Horizontalen der Azimut dargestellt und in der senkrechten die Elevation. Die Projektionsebene 22 weist im Mittelpunkt dieser Skallierung eine Öffnung 24 auf, durch welche der externe Laserstrahl 23 hindurchtritt. Da auf der Mattscheibe 22 die reflektierte Lichtstrahlung 27 optisch sichtbar ist, kann durch einfache Betätigung der Verstellschrauben 16 bzw. 18 an der Verstelleinrichtung 19 die Abbildung des reflektierten Strahles 27 auf die Öffnung 24 im Zentrum des Koordinatensystems gerichtet werden.

Eine komfortable Ausbildung ist in Figur 6 dargestellt, wo die Projektionsebene als CCD-Zeile 31 ausgebildet ist. Die elektrischen Anschlüsse der CCD-Zeile 31 sind dabei mit einer Steuereinrichtung 32 verbunden, die den Abstand zwischen ausgesendeten 23 und reflektierten Laserstrahl 27 erkennt. Über eine Anzeigeeinrichtung 33 wird dem Werker bekannt gegeben, um wieviele Schritte er Azimut bzw. Elevation in welche Richtung verändern muß, um das gewünschte Ergebnis zu erreichen.

Es ist aber auch vorstellbar, daß die Steuereinrichtung 32 diese Unterschiede über Stellelemente 34 automatisch an die Verstelleinrichtung 19 ausgibt und diese Stellelemente 34 entsprechend dem gemessenen Unterschied die Rastschritte selbsttätig ausführen.

### Bezugszeichen:

1. Kraftfahrzeug
2. Stoßfänger
3. Geschwindigkeits- und Abstandsregelsystem
4. Bussystem
5. Motorsteuerung
6. Anzeigeeinrichtung
7. Bremse
8. Getriebe
9. Sensorstrahl
10. Gehäuse
11. Linse
12. Winkelelement
13. Schrauben
14. Drehachse
15. Gehäusezapfen
16. Verstellschraube
17. Rasteinrichtung
18. Verstellschraube
19. Verstelleinrichtung
20. Schrauben
21. Lichtquelle
22. Projektionsebene
23. Laserstrahl
24. Öffnung in Projektionsebene
25. Spiegel
26. Steg
27. reflektierter Laserstrahl
28. Fahrzeuglängsachse
29. Mittelpunkt der Räder der Vorderachse
30. Mittelpunkt der Räder der Hinterachse
31. CCD-Zeile
32. Steuereinrichtung
33. Anzeigeneinrichtung
VA Vorderachse
HA Hinterachse

## Patentansprüche

1. Verfahren zur Justierung eines Strahlenganges eines strahlaussendenden Sensors, welcher an einem Kraftfahrzeug angeordnet ist, wobei im Fahrzeugstillstand ein externer Justierstrahl (23) auf eine Fläche (25) am Sensor auftrifft, welche den Justierstrahl (23) reflektiert, **dadurch gekennzeichnet, dass** der auftreffende (23) und der reflektierte Justierstrahl (27) durch eine Lageänderung des Sensors in Überdeckung gebracht werden.

2. Verfahren nach Anspruch 1 **dadurch gekennzeichnet, daß** sich der Justierstrahl (23) entlang oder parallel zu einer tatsächlichen Fahrzeugfahrtrichtung des Kraftfahrzeuges (1) ausbreitet.

3. Verfahren nach Anspruch 1 **dadurch gekennzeichnet, daß** der Justierstrahl (23) auf eine ebene Fahrzeugaufstandsfläche ausgerichtet ist.

4. Verfahren nach Anspruch 1, **dadurch** gekenn- zeichnet, dass der Justierstrahl (23) vor Auftreffen auf den Sensor senkrecht aus einer Projektionsebene (22) austritt, auf welche der reflektierte Justierstrahl (27) auftrifft und eine Abbildung erzeugt.

5. Verfahren nach Anspruch 1, 2, 3 oder 4 **dadurch gekennzeichnet, daß** der Durchmesser des Justierstrahles (23) mindestens in dem Bereich zwischen der Projektionsebene (22) und dem Sensor (10) annähernd konstant ist.

6. Verfahren nach Anspruch 5 **dadurch gekennzeichnet, daß** der Justierstrahl (23) ein Laserstrahl oder ein Infrarotstrahl ist.

7. Verfahren nach Anspruch 2 **dadurch gekennzeichnet, daß** die Fahrzeugfahrtrichtung der tatsächlichen Fahrachse des Kraftfahrzeuges entspricht, welche mit Hilfe an sich bekannter Fahrzeugachsmeßverfahren bestimmt wird.

8. Verfahren nach Anspruch 7 **dadurch gekennzeichnet, daß** die Ausrichtung der optische Achse des Justierstrahles auf die Fahrzeugfahrtrichtung durch Ausrichtung des Fahrzeuges oder durch Ausrichtung des Justierstrahles erfolgt.

9. Vorrichtung zur Justierung eines am Fahrzeug angeordneten strahlaussendenden Sensors zur Durchführung des Verfahrens nach Anspruch 1 **dadurch gekennzeichnet, daß** eine, einen Justierstrahl (23) aussendende Strahlungsquelle (21) hinter einer für den Justierstrahl (23) durchlässigen Projektionsebene (22) angeordnet ist und der durch die Projektionsebene (22) hindurchtretende Justierstrahl (23) auf eine, am Sensor (10) in einer reproduzierbaren Lage zum Sensor befestigten Reflexionsfläche (25) auftrifft und der reflektierte Strahl auf der Projektionsfläche (22) abbildbar ist, wobei durch Verstellung einer, den Sensor am Fahrzeug arretierenden Einrichtung die Abbildung des reflektierten Justierstrahls (27) mit dem ausgesandten Justierstrahl (23) in der Projektionsebene in Übereinstimmung bringbar ist

10. Vorrichtung nach Anspruch 9 **dadurch gekennzeichnet, daß** die Projektionsebene (22) eine Öffnung (24) aufweist, durch welche der Justierstrahl (23) hindurchtritt, wobei der Mittelpunkt der Öffnung (24) mit der optischen Achse der Lichtquelle (21) zusammenfällt.

11. Vorrichtung nach Anspruch 9 oder 10 **dadurch gekennzeichnet, daß** die Projektionsebene (22) als Mattscheibe ausgebildet ist, auf welcher der reflektierte Justierstrahl (27) abbildbar ist.

12. Vorrichtung nach Anspruch 9 oder 10, **dadurch gekennzeichnet , dass** die Projektionsebene als aktive CCD-Zeile (31) ausgebildet ist, die über eine Steuereinrichtung (32) mit einer am Kraftfahrzeug (1) befestigten Verstelleinrichtung (19) verbunden ist, wobei die Steuereinrichtung (32) die Verstelleinrichtung (19) solange ansteuert bis der reflektierte Strahl (27) mit dem ausgesendeten Strahl (23) übereinstimmt.

13. Vorrichtung nach Anspruch 9 **dadurch gekennzeichnet, daß** die Reflektionsfläche (25) durch eine Hilfseinrichtung gebildet ist, welche über eine Dreipunktauflage am Sensor arretierbar ist.

14. Vorrichtung nach Anspruch 9 **dadurch gekennzeichnet, daß** die Reflektionsfläche (25) eine am Sensorgehäuse (10) ausgefräste Fläche ist.

15. Vorrichtung nach Anspruch 13 oder 14 **dadurch gekennzeichnet, daß** die Reflektionsfläche (25) eine verspiegelte Kunststofffläche ist.

16. Vorrichtung nach Anspruch 9 **dadurch gekennzeichnet, daß** die optische Achse der Lichtquelle mit der tatsächlichen Fahrzeugfahrachse zusammenfällt.

## Claims

1. Method for aligning a beam path for a beam-emitting sensor arranged on a motor vehicle, where, when the vehicle is stationary, an external aligning beam (23) hits a surface (25) on the sensor which reflects the aligning beam (23), **characterized in that** the incident aligning beam (23) and the reflected aligning beam (27) are made to overlap as a result of the position of the sensor being changed.

2. Method according to Claim 1, **characterized in that** the aligning beam (23) propagates along or parallel to an actual direction of travel of the motor vehicle (1).

3. Method according to Claim 1, **characterized in that** the aligning beam (23) is oriented to a planar vehicle tyre contact area.

4. Method according to Claim 1, **characterized in that**, before it hits the sensor, the aligning beam (23) emerges perpendicularly from a projection plane (22) which the reflected aligning beam (27) hits and forms an image on.

5. Method according to Claim 1, 2, 3 or 4, **characterized in that** the diameter of the aligning beam (23) is approximately constant at least in the region between the projection plane (22) and the sensor (10).

6. Method according to Claim 5, **characterized in that** the aligning beam (23) is a laser beam or an infrared beam.

7. Method according to Claim 2, **characterized in that** the vehicle's direction of travel corresponds to the actual driving axis of the motor vehicle, which is determined using vehicle axle measurement methods which are known per se.

8. Method according to Claim 7, **characterized in that** the optical axis of the aligning beam is oriented to the vehicle's direction of travel by orienting the vehicle or by orienting the aligning beam.

9. Apparatus for aligning a beam-emitting sensor arranged on the vehicle to carry out the method according to Claim 1, **characterized in that** a radiation source (21) which emits an aligning beam (23) is arranged behind a projection plane (22) which lets through the aligning beam (23), and the aligning beam (23) which passes through the projection plane (22) hits a reflective surface (25) mounted on the sensor (10) in a reproducible position with respect to the sensor, and the reflected beam can be imaged on the projection surface (22), adjustment of a device which locks the sensor on the vehicle making it possible to coordinate the image of the reflected aligning beam (27) with the emitted aligning beam (23) in the projection plane.

10. Apparatus according to Claim 9, **characterized in that** the projection plane (22) has an opening (24) through which the aligning beam (23) passes, the center point of the opening (24) coinciding with the optical axis of the light source (21).

11. Apparatus according to Claim 9 or 10, **characterized in that** the projection plane (22) is designed as a matt plate which can image the reflected aligning beam (27).

12. Apparatus according to Claim 9 or 10, **characterized in that** the projection plane is designed as an active CCD linear array (31) which is connected via a control device (32) to an adjusting device (19) which is mounted on the motor vehicle (1), the control device (32) driving the adjusting device (19) until the reflected beam (27) is coordinated with the emitted beam (23).

13. Apparatus according to Claim 9, **characterized in that** the reflective surface (25) is formed by an auxiliary device which can be locked on the sensor by means of a three-point support.

14. Apparatus according to Claim 9, **characterized in that** the reflective surface (25) is a surface milled on the sensor housing (10).

15. Apparatus according to Claim 13 or 14, **characterized in that** the reflective surface (25) is a reflective plastic surface.

16. Apparatus according to Claim 9, **characterized in that** the optical axis of the light source coincides with the actual driving axis of the vehicle.

## Revendications

1. Procédé permettant de calibrer la trajectoire d'un rayon émis par un détecteur, qui est monté sur un véhicule automobile, un rayon de calibrage extérieur (23) étant incident, à véhicule arrêté, sur une surface (25) du détecteur qui réfléchit le rayon de calibrage (23), **caractérisé par le fait que** le rayon de calibrage incident (23) et le rayon de calibrage réfléchi (27) sont amenés en coincidence par une modification de la position du détecteur.

2. Procédé selon la revendication 1 **caractérisé par le fait que** le rayon de calibrage (23) se propage le long ou parallèlement à une direction effective de marche du véhicule automobile (1).

3. Procédé selon la revendication 1 **caractérisé par le fait que** le rayon de calibrage (23) est réglé sur une surface plane de contact au sol du véhicule.

4. Procédé selon la revendication 1 **caractérisé par le fait que** le rayon de calibrage (23), avant d'être incident sur le détecteur, est incident à angle droit sur un plan de projection (22), sur lequel le rayon de calibrage réfléchi (27) est incident et y forme une image.

5. Procédé selon la revendication 1, 2, 3 ou 4 caractéri- sé par le fait que le diamètre du rayon de calibrage (23) est approximativement constant au moins dans la zone située entre le plan de projection (22) et le détecteur (10).

6. Procédé selon la revendication 5 **caractérisé par le fait que** le rayon de calibrage (23) est un rayon laser ou un rayon infrarouge.

7. Procédé selon la revendication 2 **caractérisé par le fait que** la direction de marche du véhicule correspond à l'axe de marche effectif du véhicule automobile, lequel est déterminé à l'aide de procédés de mesure des essieux des véhicules, qui sont connus en soi.

8. Procédé selon la revendication 7 **caractérisé par le fait que** le réglage de l'axe optique du rayon de calibrage sur la direction de marche du véhicule se fait par réglage du véhicule ou par réglage du rayon de calibrage.

9. Dispositif destiné au calibrage du rayon émis par un détecteur monté sur le véhicule et permettant d'exécuter le procédé selon la revendication 1, **caractérisé par** l e fait qu'une source de rayonnement (21) émettant un rayon de calibrage (23) est disposée derrière un plan de projection (22) permettant au rayon de calibrage (23) de le traverser et que le rayon de calibrage (23) traversant le plan de projection (22) est incident sur une surface de réflexion (25) fixée sur le détecteur (10), dans une position par rapport au détecteur qui est reproductible, et que le rayon réfléchi peut être représenté sur la surface de projection (22), la représentation du rayon de calibrage (27) réfléchi pouvant être mise en coïncidence dans le plan de projection avec le rayon de calibrage émis (23) en réglant un dispositif fixant le détecteur sur le véhicule.

10. Dispositif selon la revendication 9 **caractérisé par le fait que** le plan de projection (22) comporte une perforation (24) à travers laquelle le rayon de calibrage (23) le traverse, le centre de la perforation (24) coïncidant avec l'axe optique de la source lumineuse (21).

11. Dispositif selon la revendication 9 ou 10 **caractérisé par le fait que** le plan de projection (22) est conçu sous la forme d'un verre dépoli sur lequel le rayon de calibrage réfléchi (27) peut être représenté.

12. Dispositif selon la revendication 9 ou 10 **caractérisé par le fait que** le plan de projection est conçu sous la forme d'une barrette d'éléments sensibles à transfert de charge (ou barrette CCD) reliée, par l'intermédiaire d'un dispositif de commande (32), à un dispositif de réglage (19) fixé au véhicule automobile (1), le dispositif de commande (32) excitant le dispositif de réglage (19) jusqu'à ce que le rayon réfléchi (27) coïncide avec le rayon émis (23).

13. Dispositif selon la revendication 9 **caractérisé par le fait que** la surface de réflexion (25) est formée par un dispositif auxiliaire, qui peut être fixé sur le détecteur par l'intermédiaire d'une fixation à trois points.

14. Dispositif selon la revendication 9 **caractérisé par le fait que** la surface de réflexion (25) est une surface fraisée sur le boîtier (10) du détecteur.

15. Dispositif selon la revendication 13 ou 14 caractéri- sé par le fait que la surface de réflexion (25) est une surface en matière plastique métallisée.

16. Dispositif selon la revendication 9 **caractérisé par le fait que** l'axe optique de la source lumineuse coïncide avec l'axe effectif de marche du véhicule.
